# EUROPÄISCHE PATENTSCHRIFT

(11) **EP 2 492 714 B1**
(45) Veröffentlichungstag und Bekanntmachung des Hinweises auf die Patenterteilung: **24.09.2014**
(21) Anmeldenummer: 12154874.7
(22) Anmeldetag: 10.02.2012
(51) Int. Cl.: G01V 8/20

(54) **Verfahren zum Betreiben eines Sicherheitslichtgitters und Sicherheitslichtgitter**
Method for operating a safety light grid and safety light grid
Procédé de fonctionnement d'une barrière lumineuse de sécurité et barrière lumineuse de sécurité

(30) Priorität: 25.02.2011 DE 102011000931
(43) Veröffentlichungstag der Anmeldung: 29.08.2012
(73) Patentinhaber: Sick AG, 79183 Waldkirch (DE)
(72) Erfinder: Henkel, Olaf, 79276 Reute (DE)
(74) Vertreter: Ludewigt, Christoph

(56) Entgegenhaltungen:
- EP-A1- 0 891 044
- EP-A2- 2 199 833
- DE-A1- 10 038 025
- DE-A1-102004 022 812
- US-A1- 2002 017 603

## Beschreibung

Die Erfindung betrifft ein Verfahren zum Betreiben eines Sicherheitslichtgitters zur Überwachung eines Schutzfeldes gemäß dem Oberbegriff des Anspruchs 1 sowie ein entsprechendes Sicherheitslichtgitter.

Derartige Lichtgitter für die Sicherheitstechnik dienen beispielsweise zur Absicherung von gefahrbringenden Maschinen, wie Gesenkbiegepressen, Stanzmaschinen, Schneidwerkzeugen, Schweißrobotern und dergleichen. Das Sicherheitslichtgitter schützt dabei vor unzulässigem Eindringen in Gefahrenbereiche, indem das durch das Sicherheitslichtgitter aufgespannte Schutzfeld auf Verletzung durch ein Objekt überwacht wird. Wird das Schutzfeld verletzt, gibt das Sicherheitslichtgitter ein entsprechendes Sicherheitsschaltsignal aus, das z. B. ein Abschaltsignal für die gefahrbringende Maschine sein kann. Derartige Lichtgitter als Sicherheitssensoren müssen zuverlässig arbeiten und deshalb hohe Sicherheitsanforderungen erfüllen, beispielsweise die Gerätenorm EN61496 für berührungslos wirkende Schutzeinrichtungen (BWS) und in der Applikation die Norm EN13849 für Maschinensicherheit.

Aus der DE 100 38 025 A1 ist ein Lichtgitter mit einzelnen Lichtschranken offenbart, wobei ein unterer Schwellwert und ein oberer Schwellwert ermittelt wird. Überschreitet das Sendelicht den unteren Schwellwert, wird das Sendelicht als abgeschwächt eingestuft, überschreitet das Sendelicht den oberen Schwellwert, wird das Sendelicht als ausreichend angesehen.

Die DE 10 2004 022 812 A1 offenbart ein Lichtgitter, wobei zur Begrenzung einer Reichweite des Lichtgitters in einer Auswerteeinheit ein Schwellwert abgespeichert wird mit welchem die Amplituden der Empfangssignale bewertet werden, wobei in der Auswerteeinheit eine Strahlachse als unterbrochen gewertet wird, falls die Amplitude des Empfangssignals des jeweiligen Empfängers unterhalb des Schwellwerts liegt.

Die EP 2 199 833 A2 offenbart ein Lichtgitter mit einer Balkenanzeige zur Anzeige einer Strahlstärke zur Justage des Lichtgitters.

Die Sicherheitslichtgitter bestehen in der Regel aus zwei optischen Einheiten, wobei in der einen optischen Einheit eine Reihe Lichtsender und in der anderen optischen Einheit eine entsprechende Reihe Lichtempfänger angeordnet ist, so dass einzelne Lichtsender und Lichtempfänger sich paarweise gegenüberliegen und zwischen sich das Schutzfeld des Sicherheitslichtgitters bilden. Bei Unterbrechung wenigstens eines Lichtstrahls, was durch einen Lichtempfänger detektiert wird, erfolgt die Ausgabe des Sicherheitsschaltsignals. Das Ausbleiben des Lichtempfangs wird in der Regel dadurch erkannt, dass in der Empfängerelektronik ein Schwellwert definiert ist, der bei freiem Schutzfeld überschritten wird und bei Unterbrechung des Lichtstrahls nicht überschritten wird. Üblicherweise wird das Empfangssignal in der Empfängerelektronik hoch verstärkt und dann in einer Auswerteeinheit gegen den Schwellwert verglichen. Die Dynamik der empfangenen Lichtenergie ist in der Regel sehr hoch. Dieses ist bereits dadurch bedingt, dass die optischen Einheiten des Lichtgitters für unterschiedliche Abstände geeignet sein müssen, wobei aufgrund der Divergenz der Sendelichtstrahlen die Intensität des Sendelichts am Ort des Empfängers abhängig vom Abstand sehr unterschiedlich ist. Die ausgesandte Lichtintensität eines Lichtsenders ist umgekehrt proportional zum Quadrat des Abstands. Wenn die Empfängereinheit beispielsweise sehr weit von der Lichtsendeeinheit entfernt ist, ist die empfangene Lichtmenge an einem Empfänger relativ gering und muss entsprechend verstärkt werden. Dasselbe Lichtgitter soll aber auch für geringe Abstände geeignet sein, wobei dann die gleiche Verstärkung dazu führt, dass die Empfangselektronik bei freiem Schutzfeld in der Sättigung ist.

Somit ist es üblich, dass die Schaltschwelle in der Nähe der Detektionsgrenze liegt. Das bei freiem Schutzfeld erhaltene Signal liegt aber in sehr vielen Anwendungen weit über der Sättigungsgrenze der Empfängerelektronik. Dies führt zu Verzerrungen des Signalverlaufs und Übersteuerungen der Verstärker der Empfangselektronik und damit zu einer nicht optimalen Signalauswertung.

Davon ausgehend liegt der Erfindung die Aufgabe zugrunde, ein Verfahren zum Betreiben eines Lichtgitters und ein entsprechendes Lichtgitter bereitzustellen, mit dem die vorgenannten Nachteile vermieden werden können.

Diese Aufgabe wird gelöst durch ein Verfahren mit den Merkmalen des Anspruchs 1 und einem Sicherheitslichtgitter mit den Merkmalen des Anspruchs 9.

Das erfindungsgemäße Verfahren zum Betreiben eines Sicherheitslichtgitters weist folgende Schritte auf: Aussenden von Lichtstrahlen von Lichtsendern einer ersten und/oder zweiten optischen Einheit. Empfangen der Lichtstrahlen mit Lichtempfängern der zweiten und/oder ersten optischen Einheit und Erzeugen von Empfangssignalen, wobei jeweils ein Lichtsender einem Lichtempfänger gegenüberliegend zugeordnet ist, so dass die Lichtstrahlen solch gebildeter Paare von Lichtsendern und Lichtempfängern ein Schutzfeld bilden. Auswerten der Empfangssignale der Lichtempfänger und Erzeugen eines Sicherheitsschaltsignals bei unzulässigem Objekteingriff in das Schutzfeld. Das Verfahren ist gekennzeichnet durch die weiteren Schritte: Ansteuern der Lichtsender und/oder Verstärken der Empfangssignale der Lichtempfänger, so dass alle Empfangssignale bei freiem Schutzfeld im nicht gesättigten Bereich der Empfangselektronik liegen. Einlernen einer Referenzlichtleistung bei freien Lichtstrahlen zwischen Lichtsender und Lichtempfänger. Auswerten der Amplituden aller Empfangssignale und Ausgeben des Sicherheitsschaltsignals, wenn durch einen unzulässigen Objekteingriff wenigstens eine der Amplituden in einem bestimmten Bereich liegt, wobei ein Lichtstrahl zwischen Lichtsendern und Lichtempfängern als unterbrochen gilt, wenn empfangenes Licht eine erste untere Schaltschwelle unterschreitet und das Sicherheitsschaltsignal ausgegeben wird, wenn wenigstens ein Lichtstrahl unterbrochen ist, wobei eine zweite untere Schaltschwelle in der Auswerteeinheit vorgesehen ist, die über der ersten unteren Schaltschwelle liegt, deren Überschreitung ein freies Schutzfeld anzeigt, die zweite untere Schaltschwelle unterhalb der eingelernten Referenzlichtleistung des freien Lichtstrahls und oberhalb der ersten unteren Schaltschwelle liegt und in der Auswerteeinheit zur Auswertung des empfangenen Lichts wenigstens eines Lichtempfängers eine obere Schaltschwelle vorgesehen ist, deren Wert über dem Wert der ersten unteren Schaltschwelle und der Referenzlichtleistung liegt, wobei ein Signal ausgegeben wird, wenn der Wert des empfangenen Lichts über dem oberen Schwellwert liegt.

Die Aufgabe wird weiter gelöst durch ein Sicherheitslichtgitter zur Durchführung des Verfahrens, mit einer ersten optischen Einheit, die eine Reihe nebeneinander angeordneter Lichtsender und/oder Lichtempfänger aufweist und einer zweiten optischen Einheit, die den Lichtsendern bzw. Lichtempfängern der ersten optischen Einheit zugeordnete ebenfalls nebeneinander angeordnete Lichtempfänger bzw. Lichtsender aufweist, wobei jeweils ein Lichtsender einem Lichtempfänger gegenüberliegend zugeordnet ist, so dass die Lichtstrahlen solch gebildeter Paare von Lichtsendern und Lichtempfängern ein Schutzfeld bilden, mit einer Empfangselektronik zur Verstärkung der Empfangssignale der Lichtempfänger und einer Auswerteeinheit, die die Empfangssignale auswertet und bei unzulässigem Objekteingriff in das Schutzfeld ein Sicherheitsschaltsignal ausgibt, dadurch gekennzeichnet, dass den Lichtsendern eine Steuereinheit zur Einstellung einer Senderleistung zugeordnet ist und die Empfangselektronik dazu ausgebildet ist, die Verstärkung der Empfangssignale so einzustellen, dass bei freiem Schutzfeld alle verstärkten Empfangssignale im nicht gesättigten Bereich der Empfangselektronik liegen, dass in der Auswerteeinheit eine Referenzlichtleistung bei freien Lichtstrahlen zwischen Lichtsender und Lichtempfänger gespeichert ist, wobei ein Lichtstrahl zwischen Lichtsendern und Lichtempfängern als unterbrochen gilt, wenn empfangenes Licht eine erste untere Schaltschwelle unterschreitet und ein Sicherheitsschaltsignal ausgebbar ist, wenn wenigstens ein Lichtstrahl unterbrochen ist, wobei eine zweite untere Schaltschwelle in der Auswerteeinheit vorgesehen ist, die über der ersten unteren Schaltschwelle liegt, deren Überschreitung ein freies Schutzfeld bedeutet, die zweite untere Schaltschwelle unterhalb der eingelernten Referenzlichtleistung des freien Lichtstrahls und oberhalb der ersten unteren Schaltschwelle liegt und in der Auswerteeinheit zur Auswertung des empfangenen Lichts wenigstens eines Lichtempfängers eine obere Schaltschwelle vorgesehen ist, deren Wert über dem Wert der ersten unteren Schaltschwelle und der eingelernten Referenzlichtleistung liegt, wobei ein Signal abgebbar ist, wenn der Wert des empfangenen Lichts über dem oberen Schwellwert liegt.

Ein Vorteil der Erfindung ist, dass die Amplitudenauswertung des empfangenen Lichts zur Erhöhung der effektiven Auflösung genutzt werden kann. Nach dem Stand der Technik ist zur sicheren Erkennung von Objekten eine vollkommene Abdeckung mindestens eines Lichtstrahls gefordert. Um dies zu gewährleisten, wird die geometrische Auflösung eines Lichtgitters aus der Summe des Strahlabstands und des Durchmessers der Sendeoptiken bestimmt. Denn nach dieser Bedingung deckt ein Objekt im Schutzfeld mit der Größe der geometrischen Auflösung in jeder Position mindestens eine Optik vollkommen ab. Dies ist sicherheitstechnisch bisher notwendig gewesen, da schon ein kleiner freier Bereich der Optikfläche genügend Signal im Lichtempfänger erzeugen könnte, um die untere Schaltschwelle zu überschreiten, denn im Lichtempfänger wurde bisher die untere Schaltschwelle möglichst niedrig gelegt. Erfindungsgemäß wird nun aber die Amplitude oder Lichtleistung des Empfangssignals ausgewertet, so dass auch eine Teilabdeckung der Optik sicher erkannt werden kann. Damit werden auch Objekte kleiner als die vorgenannte geometrische Auflösung erkannt z. B. ein Objekt mit einer Größe des Strahlabstandes, das in der ungünstigsten Position zwei benachbarte Lichtstrahlen jeweils nur zur Hälfte abdeckt. Eine solche hälftige Abdeckung wird mit der Erfindung jedoch detektiert. Somit ist eine Objektgröße, die noch sicher erkannt werden kann, unabhängig vom Sendeoptikdurchmesser, im Gegensatz zur vorgenannten geometrischen Auflösung.

Weiter ist die zweite untere Schaltschwelle in der Auswerteeinheit vorgesehen, deren Überschreitung durch das empfangene Sendelicht dazu führt, dass ein freies Schutzfeld vorliegt und die Auswerteeinheit kein Sicherheitsschaltsignal ausgibt. Die zweite untere Schaltschwelle liegt geringfügig unterhalb der eingelernten Referenzlichtleistung des freien Lichtstrahles und oberhalb der ersten unteren Schaltschwelle. Ein bereits unterbrochener Lichtstrahl wird erst wieder freigegeben, wenn die empfangene Lichtleistung wieder nahezu dem Ausgangswert vor der Strahlunterbrechung entspricht. Das Überschreiten der zweiten unteren Schaltschwelle wird beim Verlassen des Objektes wieder erreicht und führt daher nicht zu einer Ausgabe des Sicherheitsschaltsignals.

Für die zuverlässige Detektion bei Teilstrahlabdeckung ist es notwendig, dass die empfangene Strahlungsleistung bei einer Teilabdeckung des Lichtstrahls relativ zur empfangenen Strahlungsleistung bei freiem Strahl gemessen wird. Daher wird eine empfangene Referenzlichtleistung vor Aufnahme des Überwachungsbetriebes des Lichtgitters bei freiem Schutzfeld zwischen Lichtsender und Lichtempfänger eingelernt. Die bei freiem Lichtstrahl empfangene Referenzlichtleistung entspricht definierten 100 % Lichtleistung. Diese Lichtleistung wird in der Auswerteeinheit, beispielsweise für jeden Lichtstrahl gespeichert. Weiter wird die erste untere Schaltschwelle in der Auswerteeinheit gespeichert, bei deren Unterschreitung durch empfangenes Licht ein Sicherheitsschaltsignal ausgegeben wird. Die erste untere Schaltschwelle sollte einerseits einen ausreichend großen Abstand zur eingelernten Referenzlichtleistung haben, damit Alterungseffekte der Bauteile, Temperaturschwankungen oder Verschmutzung einer Frontscheibe kein vorzeitiges, ungewolltes Sicherheitsschaltsignal generieren. Andererseits muss die erste untere Schaltschwelle sehr nahe an der eingelernten Referenzlichtleistung bei freiem Lichtstrahl liegen, damit lokale Intensitätsunterschiede innerhalb des Lichtsendekegels oder des Empfangskegels nicht dazu führen, dass bei Objekten im Schutzfeld durch einen freien Strahlenbereich noch ausreichend Lichtleistung empfangen wird und damit ein Sicherheitsschaltsignal verhindert wird.

In dieser erfindungsgemäßen Ausgestaltung des Verfahrens zum Betreiben eines Lichtgitters ist sichergestellt, dass entweder durch Einstellen der Sendeleistung und/oder der Empfängerempfindlichkeit, also der Verstärkung der Empfangssignale, die Empfangselektronik immer im nicht gesättigten Bereich, beispielsweise im linearen, betrieben wird. Damit kann die Amplitude der Empfangssignale - und nicht wie im Stand der Technik nur das einfache Überschreiten eines Schwellwertes - ausgewertet werden.

Durch die Auswertung der Amplituden der Empfangssignale einer oder mehrerer der Lichtstrahlen und womöglich deren gegenseitiger Verrechnung kann auf eine Vielzahl von Umweltbedingungen und Lichtgitterzustände geschlossen werden. Diese umfassen unter anderem eine Strahlunterbrechung (unzulässiger Objekteingriff), eine Verschmutzung, Dejustage, Umspiegelungen, Degradation, Fremdlicht, Fehlfunktionen und weitere Veränderungen. Bei der Auswertung zur Detektion dieser Eigenschaften und Zustände macht man sich deren typische unterschiedliche zeitliche Verläufe und deren gegenseitige Abhängigkeiten zur Unterscheidung zu Nutze.

Die Amplitudenauswertung kann für eine Überprüfung der korrekten Funktion der Empfangsseite des Lichtgitters genutzt werden. Dazu wird vorübergehend ein stärkeres oder schwächeres Lichtsignal von den Lichtsendern gesendet und auf der Empfangsseite überprüft, ob die Empfangssignale sich erwartungsgemäß entsprechend der Änderungen des ausgesandten Signals verhalten. Dadurch kann der komplette Übertragungskanal, bestehend aus optischer Wegstrecke und empfangsseitiger Elektronik und Auswertung, inklusive gegebenenfalls enthaltener integrierter Schaltungsbauteile, getestet werden. Diese waren bisher nur mit hohem zusätzlich zu implementierenden Schaltungsaufwand oder gar nicht überprüfbar. Durch solche Überprüfungen kann eine höhere funktionale Sicherheit erreicht werden. Auch kann jede Veränderung der Sendeleistung oder der Empfangsempfindlichkeit sowie die fehlerhafte Aktivierung mehrerer Sender erkannt werden, was bisher nicht möglich war. Durch eine zeitliche Verfolgung der Änderung des Amplitudenwerts der empfangenen Sendeleistung kann eine nachlassende Systemleistung durch z.B. Degradation oder Verschmutzung erkannt werden und eine Korrektur zur Wiederherstellung der Systemleistung vorgenommen werden, beispielsweise durch Erhöhung der Sendeleistung oder Erhöhung der Empfängerempfindlichkeit. Eine Erhöhung der Sendeleistung hat den Vorteil, dass nicht die Reichweite sondern auch der Störabstand wiederhergestellt wird.

Ein weiterer Vorteil der Erfindung liegt darin, dass eine weitere Erhöhung der Sicherheit erreicht werden kann, da Störlichtimpulse von korrekten Sendelichtpulsen sicher unterschieden werden können, denn die Amplitude der Störlichtpulse ist mit sehr hoher Wahrscheinlichkeit verschieden von der Amplitude des korrekten Sendelichtpulses. Damit ist hinreichend unwahrscheinlich, dass ein fehlender korrekter Sendelichtpuls durch einen Störlichtimpuls ersetzt wird.

Gemäß der Erfindung ist in der Auswerteeinheit zur Auswertung des empfangenen Lichts wenigstens eines Lichtempfängers eine obere Schaltschwelle vorgesehen, deren Wert über dem Wert der ersten unteren Schaltschwelle, über dem Wert der zweiten unteren Schaltschwelle und über der eingelernten Referenzlichtleistung liegt, wobei ein Signal ausgegeben wird, wenn der Wert des empfangenen Lichts über dem oberen Schwellwert liegt.

Dadurch ist es möglich, eine Umspiegelung oder Dejustage auch dann zu detektieren, wenn der direkte Lichtweg zwischen einem Lichtsender und dem zugehörigen Lichtempfänger frei ist, da sich das Licht der direkten Lichtstrecke zu dem umgelenkten, umspiegelten Licht addiert oder bei einer Dejustage die Lichtleistung ansteigen kann und damit die obere Schaltschwelle überschritten wird. Hierzu ist die obere Schaltschwelle derart eingestellt, dass eine Summe von direkten Lichtstrahlen aus dem Lichtsender und umgelenkten, umspiegelte oder dejustierte Lichtstrahlen über der oberen Schaltschwelle liegen.

Aufgrund der Überschreitung der oberen Schaltschwelle wird ein Signal, ein Warnsignal oder eine visuelle Anzeige ausgegeben. Im Falle des Warnsignals oder der visuellen Anzeige wird ein Bediener darauf aufmerksam gemacht, dass beispielsweise eine nachteilige Umspiegelung vorhanden ist oder eine Dejustage stattfand und kann diese ggf. entfernen oder verhindern. Jedoch kann es auch vorgesehen sein, aufgrund der detektierten Überschreitung der oberen Schaltschwelle ein Sicherheitsschaltsignal auszugeben um eine gefahrbringende Bewegung entweder zu stoppen oder dafür zu sorgen, dass die Maschine und damit die gefahrbringende Bewegung nicht gestartet werden kann. Dadurch wird gewährleistet, dass es aufgrund der Überschreitung der oberen Schaltschwelle nicht zu einer Gefährdung von Personen kommen kann.

Die Unterschreitung der ersten unteren Schaltschwelle führt zu einem Wechsel eines Status von einem Zustand 'Lichtweg frei' zu einem Zustand 'Lichtweg unterbrochen' und insbesondere wird dieser Zustand von einer Anzeige visuell angezeigt. Weiter führt die Überschreitung der zweiten unteren Schaltschwelle zu einem Wechsel des Status von dem Zustand 'Lichtweg unterbrochen' zu dem Zustand 'Lichtweg frei', wobei insbesondere auch dieser Zustand von einer Anzeige angezeigt wird.

Dieser Status mit den Zuständen 'Lichtweg frei' und 'Lichtweg unterbrochen' wird bevorzugt für alle Lichtstrahlen kombiniert und gemeinsam für alle Strahlachsen ausgegeben. Nur wenn alle Strahlachsen zu einem Status 'Lichtweg frei' führen, wird dieser Status für alle Lichtstrahlen angezeigt. Ist wenigstens einer der Strahlachsen unterbrochen, wird der Status 'Lichtweg unterbrochen' angezeigt.

Die Erfindung ermöglicht es, dass alle Lichtsender so eingestellt werden, dass auf jeden Lichtempfänger in etwa die gleiche Lichtintensität auftrifft. Durch Vergleich der Empfangssignale untereinander, kann dann eine Umspiegelung oder eine Dejustage einzelner Strahlen dadurch erkannt werden, dass dort die empfangene Lichtintensität höher ist als bei den Strahlen, bei denen keine Umspiegelung oder Dejustage auftrat. Somit kann durch eine einfache Auswertung der Empfangssignale eine Umspiegelung erkannt werden, wodurch die Sicherheit des Sicherheitslichtgitters weiter erhöht ist.

Ein weiterer Vorteil ist, dass durch die erfindungsgemäße Amplitudenauswertung Sättigungseffekte, wie Verzerrungen und Nachschwingen vermieden werden und dadurch eine effektivere Signalauswertung möglich ist. So können zum Beispiel bei Kodierverfahren für die Sendelichtstrahlen, welche Zeitschlitze als Erwartungsfenster für Sendepulse verwenden, die Zeitschlitze optimal kurz gewählt werden. Mittels der Erfindung kann nämlich die zeitliche Position der Sendepulse, also z.B. die zeitliche Position von Pulsflanken oder Nulldurchgängen, sehr genau detektiert werden, da der zeitliche Verlauf der Pulse nicht durch Verzerrungen und Sättigungseffekte gestört ist.

Wenn nicht nur eine Sättigung vermieden wird, sondern auch ein nichtlinearer Betrieb der Empfängerelektronik, ergeben sich weitere Vorteile, wie zum Beispiel die Vermeidung von Intermodulationsfrequenzen bei Kodierverfahren zum Frequenzmultiplex.

Die Erfindung ermöglicht es, die Empfangsempfindlichkeit soweit zu reduzieren, dass bei geringem Abstand zwischen Lichtsender und Lichtempfänger mit maximaler Sendeleistung gearbeitet werden kann, ohne dass die Empfangselektronik gesättigt wird. Um den maximalen Störabstand bei gleichzeitig nicht gesättigtem Betrieb zu gewährleisten, wird bei Verringerung des Abstandes zwischen Lichtsender und Lichtempfänger wie folgt vorgegangen: Zunächst wird die Empfängerempfindlichkeit reduziert und erst wenn die Sättigung der Empfangselektronik nicht mehr vermeidbar ist, wird die Sendeleistung reduziert.

In einer bevorzugten Ausführungsform ist der optoelektronische Sensor als Sicherheitslichtgitter ausgebildet und muss die Sicherheitsnormen z. B. EN 954 und/oder IEC 61508 erfüllen.

Bei Lichtgittern, bei denen in jeweils einer optischen Einheit sowohl Lichtsender als auch Lichtempfänger vorgesehen sind, kann über einen optischen Hin- und Rückkanal die Lichtleistung der Lichtsender automatisch angepasst werden. Alternativ kann dies auch über eine andere Kommunikationsverbindung zwischen den beiden gegenüberliegenden optischen Leisten geschehen, beispielsweise über eine galvanische Verbindung.

Da die von den Lichtsendern ausgesendete Lichtenergie umgekehrt proportional zum Quadrat des Abstands ist, kann über eine Bestimmung des Abstandes auch die Lichtleistung voreingestellt werden. Eine automatische Bestimmung des Abstandes zwischen den optischen Einheiten des Sicherheitslichtgitters kann beispielsweise nach der EP 1 544 643 durchgeführt werden.

In Weiterbildung der Erfindung werden die Lichtsender so eingestellt, dass diese alle jeweils für eine ungefähr gleiche Lichtleistung auf den zugehörigen Lichtempfängern sorgen. Anschließend wird die Lichtleistung je nach Abstand zwischen den optischen Einheiten des Lichtgitters nur noch an allen Lichtsendern gleichermaßen verändert. Damit wird erreicht, dass eine Umspiegelung einzelner Strahlen durch Vergleich mit Empfangssignalen nicht umspiegelter Strahlen oder eine Dejustage erkannt wird.

Beim Betrieb mehrerer Sicherheitslichtgitter in unmittelbarer Nachbarschaft zueinander, empfangen die Lichtempfänger in der Regel nicht nur das Licht des zugehörigen Lichtsenders, sondern auch Licht anderer Lichtsender. Um die Auswertung nicht zugehöriger Lichtsender zu einem Lichtempfänger zu verhindern, werden die Lichtstrahlen unterschiedlich kodiert. Beispielsweise im Zeitbereich, im Zeitmultiplexbetrieb oder im Frequenzbereich durch Pulsmuster oder Pseudozufallsrauschcodes.

Derartige Kodierverfahren werden durch die vorliegende Erfindung besonders wirksam. Bisher konnten derartige Kodierverfahren nur eingeschränkt genutzt werden, da die Lichtpulse durch ihre Lichtleistung Sättigungseffekte in den Lichtempfängern hervorrufen konnten und dadurch die empfangenen Pulse stark verformt wurden, so dass in Folge aus Sicherheitsgründen ein Sicherheitsschaltsignal ausgelöst wurde, was zu einer eingeschränkten Verfügbarkeit führte.

Die Lichtempfänger und die Empfangselektronik arbeiten jedoch erfindungsgemäß in einem linearen Arbeitsbereich. Das bedeutet, dass die Lichtempfänger und die Empfangselektronik durch das empfangene Licht nicht übersteuert werden. Dadurch wird eine Verfügbarkeit der optoelektronischen Sensoren, insbesondere Sicherheitslichtgittern erhöht, weil dadurch eine Funktionsreserve vorgesehen ist. Weiterhin ist eine Realisierung von weit mehr Kodierungen möglich als bisher, da die unterschiedlichen Kodes aufgrund einer besseren Empfindlichkeit in dem linearen Arbeitsbereich besser erkannt und aufgelöst werden können und daher besser gegeneinander getrennt werden können.

In einer Weiterbildung der Erfindung kann die Sendeleistung geregelt werden, wohingegen die Empfangssignale mit fest eingestellter Verstärkung der Empfangselektronik verstärkt werden. Alternativ kann auch anders herum die Verstärkung der Empfangselektronik eingestellt werden und die Senderleistung fest eingestellt sein, insbesondere auf maximale Leistung.

Die Einstellungen können dabei in der Endfertigung des Sicherheitslichtgitters erfolgen, in der das Sicherheitslichtgitter elektronisch vermessen wird und für jeden Lichtsender ein Kalibrierwert oder für alle Lichtsender ein gemeinsamer Kalibrierwert und/oder jedem Lichtempfänger und/oder alle Lichtempfänger gemeinsam ein Kalibrierwert in einer elektronischen Schaltung im Lichtgitter abgespeichert wird.

Um die vorgenannten Auswertungen, beispielsweise zur Ermittlung von Umweltbedingungen oder Lichtgitterzuständen vornehmen zu können, ist es vorteilhaft, wenn die Amplitudenwerte der Empfangssignale in einem Speicher der Auswerteeinheit gespeichert werden.

Zur Überprüfung des Lichtgitters ist vorteilhafterweise die Senderleistung der Lichtsender variierbar und die dieser Variation entsprechenden Veränderungen der Empfangssignale werden von der Auswerteeinheit detektiert und ausgewertet.

Der Kommunikationskanal kann aus einer galvanischen oder einer drahtlosen Verbindung gebildet sein, wobei er in einer Ausführungsform aus einer optischen Verbindung zwischen den beiden Einheiten gebildet ist, wobei die optische Verbindung vorzugsweise durch eines der Paare von Lichtsender und Lichtempfänger gebildet ist. Dann sind keine separaten Vorrichtungen und Bauteile notwendig.

Für die Erfindung ist es erforderlich dass die optischen Einheiten derart zueinander ausgerichtet werden, dass jede Optik des Lichtempfängers vollständig vom Licht des zugehörigen Lichtsenders überstrahlt wird und jede Optik des Lichtsenders vollständig von dem Lichtempfänger erfasst wird. Dadurch ist gewährleistet, dass eine Abdeckung eines Lichtstrahls zwischen Lichtsender und Lichtempfänger auch von dem Empfänger detektiert werden kann.

In Weiterbildung der Erfindung ist es vorgesehen, dass bei Inbetriebnahme des Lichtgitters die Lichtstrahlen eines Lichtsenders auf mehrere Lichtempfänger treffen oder ein Lichtempfänger das Licht mehrerer Lichtsender vollständig empfängt. Dadurch kann sichergestellt und überprüft werden, dass jede Optik des Lichtempfängers vollständig vom Licht des zugehörigen Lichtsenders überstrahlt wird und jede Optik des Lichtsenders vollständig von dem Lichtempfänger erfasst wird.

Im Folgenden wird die Erfindung anhand eines Ausführungsbeispiels unter Bezugnahme auf die Zeichnung im Einzelnen erläutert. In der Zeichnung zeigt:
- Figur 1: eine schematische Darstellung eines erfindungsgemäßen Sicherheitslichtgitters;
- Figur 2 und 3: jeweils ein Sicherheitslichtgitter mit einem Prüfkörper im Schutzfeld;
- Figur 4: eine schematische Darstellung von unterschiedlichen Schaltschwellen;
- Figur 5 bis 8a: jeweils schematische Darstellungen von Lichtstrahlabdeckungen durch Prüfkörper eines erfindungsgemäßen Lichtgitters;
- Figur 9 bis 11: ein Kreuzstrahlverfahren des erfindungsgemäßen Lichtgitters.

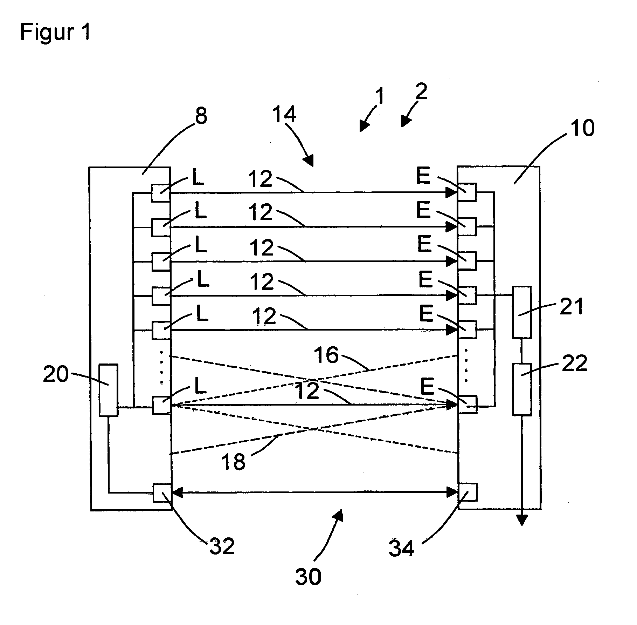

Figur 1 zeigt einen optoelektronischen Sensor 1, insbesondere ein Sicherheitslichtgitter 2, bestehend aus einer ersten optischen Einheit 8 und einer zweiten optischen Einheit 10. Die beiden optischen Einheiten 8 und 10 sind zueinander gegenüberliegend angeordnet. Die Lichtsender L der ersten optischen Einheit 8 senden dabei Licht aus, welches von den Lichtempfängern E der zweiten optischen Einheit 10 empfangen wird, wodurch Sende-/Empfangspaare gebildet werden, dargestellt durch die optischen Lichtstrahlen 12. Dadurch wird zwischen den beiden optischen Einheiten 8 und 10 ein Schutzfeld 14 gebildet. Dabei muss nicht unbedingt die Anzahl der Lichtsender L gleich der Anzahl der Lichtempfänger E sein. Ein solches Sicherheitslichtgitter 2 findet beispielsweise Anwendung an Maschinen zur Absicherung von gefahrbringenden Bewegungen für Personen. Greift eine Person in das Schutzfeld 14 ein, wird wenigstens ein Lichtstrahl 12 abgeschwächt oder unterbrochen. Das führt über einen vorgesehenen sicheren Ausgang zur Ausgabe eines Sicherheitsschaltsignals an eine Maschinensteuerung, um die gefahrbringende Bewegung zum Schutz der Person zu stoppen.

Bei dem Sicherheitslichtgitter 1 kann es sich auch um ein Lichtgitter handeln mit identischen Sender-/Empfängereinheiten gemäß dem Patent EP 1 870 734 B1.

Über eine Steuereinheit 20 können die Lichtsender L derart angesteuert werden, dass die Intensität eines jeden Lichtstrahls 12 vorgebbar ist. Ähnlich ist die Empfangselektronik 21 ausgebildet, indem nämlich die Verstärkung der von den Lichtempfängern E gelieferten Empfangssignale für jeden Lichtempfänger E einstellbar ist. Die Einstellung der Verstärkung erfolgt derart, dass bei freiem Schutzfeld alle verstärkten Empfangssignale eine Amplitude haben, so dass die Empfangselektronik 21 nicht in der Sättigung betrieben wird.

Über einen Kommunikationskanal 30 können die Steuereinheit 20, die Empfangselektronik 21 und die Auswerteeinheit 22 miteinander kommunizieren, so dass die in der Empfangselektronik 21 verstärkten Empfangssignale die Empfangselektronik 21 bei freiem Schutzfeld 14, also wenn die Lichtstrahlen 12 die Empfänger E ungehindert erreichen können, nicht in die Sättigung treiben. Der Kommunikationskanal umfasst Mittel 32 und 34, die in dem dargestellten Ausführungsbeispiel Sende-/Empfangseinheiten einer Funkverbindung sein können. Alternativ kann der Empfangskanal auch durch eine galvanische Verbindung gebildet sein oder sogar durch eine optische Verbindung, insbesondere durch eines der Lichtsender-Lichtempfänger-Paare selbst.

Der erfindungsgemäße Betrieb des Sicherheitslichtgitters 2 umfasst die folgenden Schritte. Die von den Lichtsendern L ausgesandten Lichtstrahlen 12 werden von den Lichtempfängern E empfangen und die Lichtempfänger E erzeugen Empfangssignale, die in der Empfangselektronik 21 verstärkt werden, wobei die Verstärkung so begrenzt ist, dass bei freiem Schutzfeld 14 die Empfangselektronik nicht in die Sättigung getrieben ist. Dies kann entweder dadurch geschehen, dass die Lichtsender L entsprechend angesteuert werden oder die Empfangselektronik 21 eine entsprechende Verstärkung einstellt. Dies kann je nach Betriebsart unterschiedlich sein, wobei zur Abstimmung zwischen Lichtsender und Lichtempfänger E die Steuereinheit 20 mit der Empfangselektronik 21 über den Kommunikationskanal 30 kommunizieren kann. In der Auswerteeinheit 22 schließlich werden die verstärkten Empfangssignale ausgewertet. Die Auswertung umfasst die eingangs genannten Möglichkeiten und eine Auswertung auf Detektion eines unzulässigen Objekteingriffs, wobei dann das Sicherheitssignal ausgegeben wird, wenn die Amplitude wenigstens eines Empfangssignals in einem vorbestimmten Bereich liegt. Dies kann z.B. dann der Fall sein, wenn ein Lichtstrahl unterbrochen wurde.

Die Lichtsender L bestehen dabei aus einem Sendebauteil, beispielsweise einer Leuchtdiode und einer Optik, bestehend aus einer Blende und/oder einer oder mehrerer Linsen. Die Lichtempfänger E sind analog dazu aus einem photoempfindlichen Bauteil und einer Optik aufgebaut. Die optischen Achsen der Sende- bzw. Empfangselemente einer Leiste sind dabei parallel zueinander ausgerichtet.

Das Licht der Lichtsender L wird dabei in Form eines Lichtsendekegels 16 ausgesendet, beispielhaft für alle Lichtsender L an dem unteren Lichtsender L dargestellt, entsprechend den gestrichelten Linien. Die Lichtempfänger E weisen ebenso einen Empfangskegel 18 auf, innerhalb dessen Licht empfangen wird, beispielhaft dargestellt an dem unteren Lichtempfänger E durch weitere gestrichelte Linien, die von dem Lichtempfänger En ausgehen. Je größer die Öffnungswinkel der Lichtkegel ausgebildet sind, desto einfacher lassen sich die beiden Leisten zueinander ausrichten.

Zur Ansteuerung sind die Lichtsender L mit der Steuereinheit 20 verbunden. Zur Auswertung sind die Lichtempfänger E über die Empfangselektronik 21 einer Auswerteeinheit 22 verbunden. Sind Lichtsender L und Lichtempfänger E zusammen in jeweils einer Leiste integriert, ist jeweils eine kombinierte Steuer- und Auswerteeinheit vorgesehen. Die Lichtsender L gemäß Figur 1 werden durch die Steuereinheit 20 nacheinander angesteuert, wobei diese gepulst angesteuert werden können zur Unterdrückung von Fremdlichtsignalen. Die Lichtempfänger E werden durch die Auswerteeinheit 22 nacheinander ausgewertet zum Empfang der Lichtpulse der gegenüberliegenden Lichtsender L. Damit die beiden optischen Einheiten 8 und 10 zusammenarbeiten können, um das Schutzfeld 14 aufzuspannen, sind die Paare von Lichtsender L und Lichtempfänger E zur Bildung von Lichtwegen aufeinander abzustimmen, so dass beispielsweise der Lichtempfänger E nur das Licht von dem Lichtsender L empfängt. Dazu weist die Auswerteeinheit 22 Mittel zur zeitlichen Synchronisation auf. Die Auswerteeinheit 22 kann damit die Auswertung der Empfangselemente E auf die Sendepulse der gegenüberliegenden Lichtsender L synchronisieren, wodurch die Lichtwege mit den Lichtstrahlen 12 definiert sind.

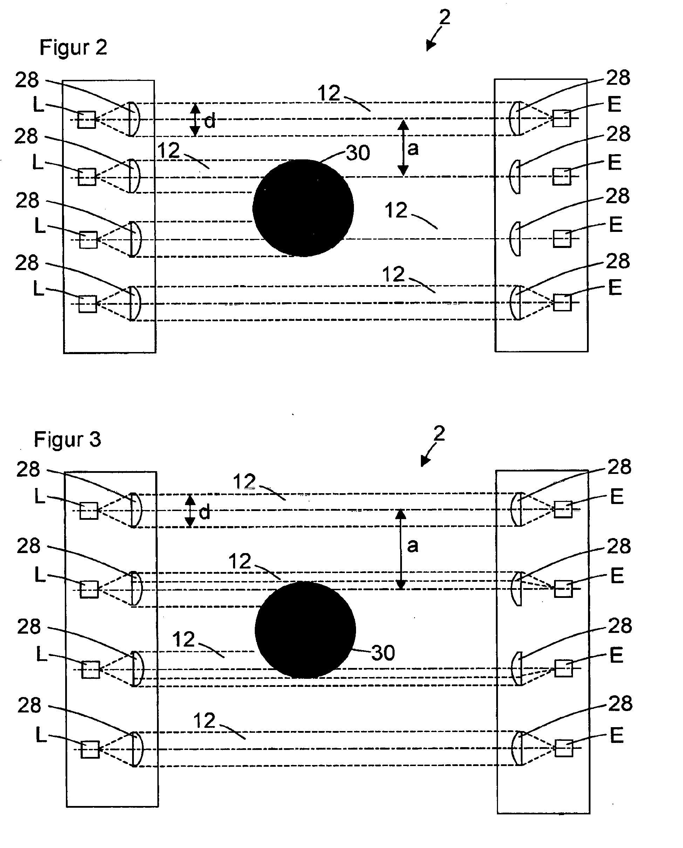

Figur 2 zeigt ein Lichtgitter 2, welches nach dem Prinzip einer Vollabdeckung von Lichtstrahlen zwischen dem Lichtsender L und dem Lichtempfänger E arbeitet. Die Lichtsender L und Lichtempfänger E weisen dabei jeweils eine Optik 28 auf. Die Lichtstrahlen 12 haben dabei einen Durchmesser d und einen Abstand a. Ein zylindrischer Prüfkörper 30 mit einem Durchmesser, welcher einem zugesicherten Detektionsvermögen, beispielsweise 30mm entspricht, deckt dabei mindestens einen Lichtstrahl mit dem Durchmesser d vollständig ab, sobald der Prüfkörper in das Schutzfeld eindringt. Dies bedeutet, dass, abhängig vom Detektionsvermögen, eine hohe Anzahl eng benachbarter Lichtsstrahlen mit dem Durchmesser d benötigt werden. Die Anzahl ist abhängig vom Durchmesser d und dem Abstand a der Lichtstrahlen.

Gemäß der vorliegenden Erfindung kann der Prüfkörper 30 jedoch entsprechend Figur 3 schon bei einer teilweisen Abdeckung der Lichtstrahlen detektiert werden. Da der Abstand a der Lichtstrahlen bei Figur 3 größer ist als bei Figur 2, wird durch den Prüfkörper nicht immer ein Lichtstrahl vollständig abgedeckt. Wie in Figur 2 ersichtlich, sind zwei Lichtstrahlen nur teilweise durch den Prüfstab abgedeckt.

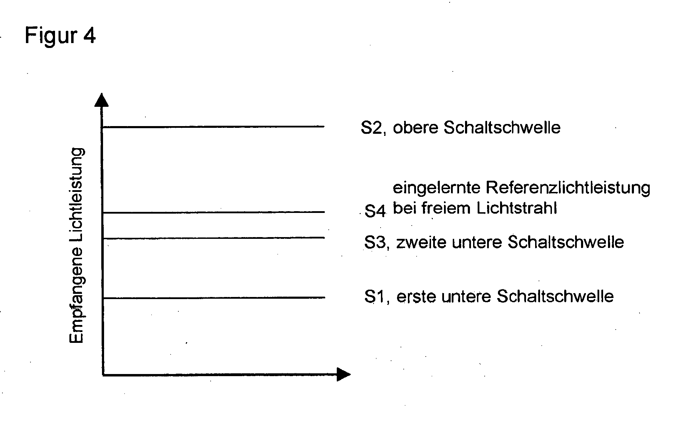

Für die zuverlässige Detektion bei Teilstrahlabdeckung ist es notwendig, dass die empfangene Lichtleistung bei einer Teilabdeckung des Lichtstrahls, relativ zur empfangenen Lichtleistung bei freiem Strahl gemessen wird. Daher wird die empfangene Referenzlichtleistung S4, entsprechend Figur 4 vor Aufnahme des

Überwachungsbetriebes bei freiem Schutzfeld des Lichtgitters eingelernt. Eine bei freiem Lichtstrahl empfangene Referenzlichtleistung S4 entspricht definierten 100% Lichtleistung, wie in Figur 4 dargestellt. Diese Referenzlichtleistung S4 wird in der Auswerteeinheit beispielsweise für jeden Lichtstrahl gespeichert. Weiter wird eine erste untere Schaltschwelle S1 in der Auswerteeinheit gespeichert, bei deren Unterschreitung durch empfangenes Licht ein Sicherheitsschaltsignal ausgegeben wird. Die erste untere Schaltschwelle S1 sollte einerseits einen ausreichend großen Abstand zur eingelernten Referenzlichtleistung S4 haben, damit durch Alterungseffekte der Bauteile, Temperaturschwankungen oder Verschmutzung einer Frontscheibe kein vorzeitiges, ungewolltes Sicherheitsschaltsignal generiert wird. Andererseits muss die erste untere Schaltschwelle S1 sehr nahe an der eingelernten Strahlungsleistung S4 liegen, damit lokale Intensitätsunterschiede innerhalb des Lichtsendekegels oder des Empfangskegels nicht dazu führen, dass bei Objekten im Schutzfeld durch einen freien Strahlenbereich noch ausreichend Strahlungsleistung empfangen wird und damit ein Sicherheitsschaltsignal verhindert wird.

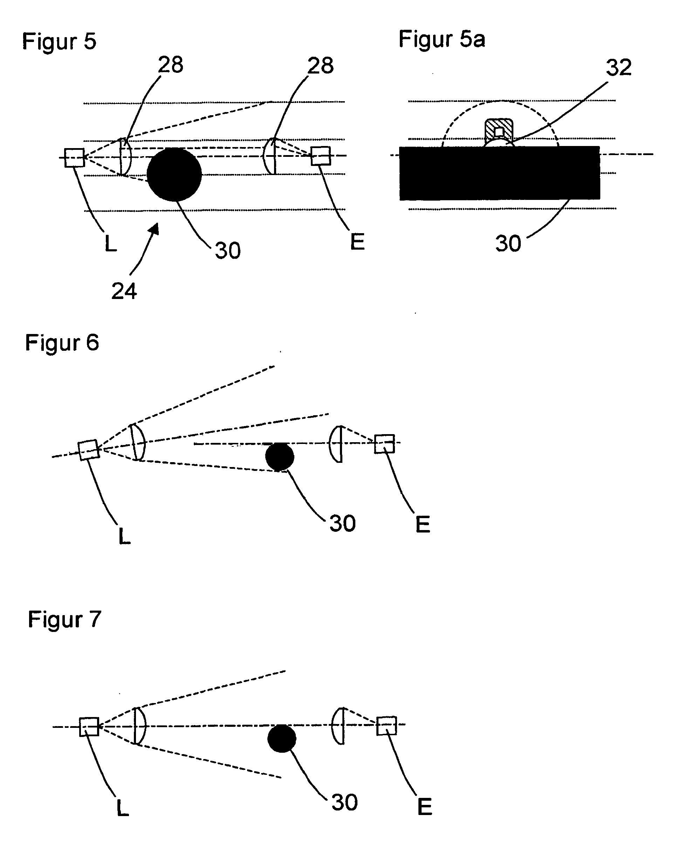

Figur 5 zeigt einen Lichtsender L und einen Lichtempfänger E mit vorgeordneten Optiken 28. Mehr als die Hälfte der Optikfläche wird durch einen Prüfkörper 30 oder ein Objekt 24 abgedeckt. Figur 5a zeigt dieselbe Anordnung aus Figur 5 in Frontalansicht auf den Lichtsendekegel. In Figur 5a sind Bereiche mit hoher Strahlungsleistung schraffiert dargestellt. Dieser Bereich entsteht beispielsweise durch eine Abbildung des LED-Chips des Lichtsenders. Ist ein lokaler Kontrast der Strahlungsleistung sehr hoch, besteht die Gefahr, dass trotz Teilstrahlabdeckung die empfangene Lichtleistung nur geringfügig sinkt. Zur Vermeidung hoher lokaler Intensitätskontraste können z. B. 'Point Source' LEDs eingesetzt werden, welche eine punktförmige Lichtquellencharakteristik haben. Auch durch eine starke extra- oder intrafokale Lage des LED-Chips relativ zur verwendeten Optik 28 lassen sich lokale Kontraste reduzieren. Da eine vollständige Beseitigung lokaler Kontraste aufwändig ist, müssen die lokalen Kontraste bei der Festlegung der ersten unteren Schaltschwelle S1 berücksichtigt werden.

Neben lokalen Intensitätskontrasten, welche durch geeignete Wahl der ersten unteren Schaltschwelle beherrschbar sind, treten hohe Intensitätsunterschiede innerhalb der gesamten Lichtsendekegel und Empfangskegel auf. So ist im Allgemeinen die Intensität im Zentrum des Lichtsendekegels deutlich höher als an den Rändern des Lichtsendekegels.

Beim Betrieb des Lichtgitters muss davon ausgegangen werden, dass z.B. durch ungewollte Manipulation der Lichtsender des Lichtgitters dejustiert wird und damit Bereiche des Lichtsendekegels mit sehr hoher Intensität empfangen werden. Figur 6 zeigt die Ausgangssituation ohne Dejustage. Der Lichtempfänger E empfängt nur Lichtstrahlen mit geringer Intensität aus dem Randbereich des Lichtsendekegels. Bei freiem Lichtweg wurde diese Referenzlichtleistung beispielsweise eingelernt. Beim Eindringen des Prüfkörpers 30 oder eines Objektes in das Schutzfeld wird die erste untere Schaltschwelle unterschritten und das Sicherheitsschaltsignal wird korrekt ausgegeben.

Durch eine anschließende ungewollte Dejustage, dargestellt in Figur 7, wird Licht mit höherer Intensität aus dem Zentrum des Lichtsendekegels empfangen und führt nun zu einer Überschreitung der ersten unteren Schaltschwelle und damit zum Nichterkennen des Prüfkörpers 30 oder des Objektes.

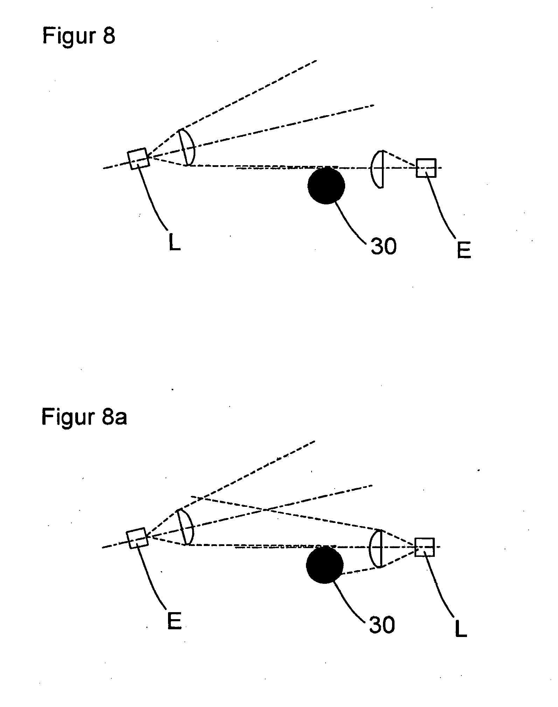

Extremer Intensitätskontrast entsteht auch, wenn Lichtsendekegel oder Empfangskegel keine vollständige Überdeckung zeigen. Im dargestellten Beispiel gemäß Figur 8 hat eine Teilstrahlabdeckung keinen Einfluss auf die empfangene Lichtleistung und verhindert die Detektion des Prüfkörpers oder des Objektes.

Steigt aufgrund einer beispielsweise unbeabsichtigten Manipulation die empfangene Lichtleistung, wie in Figur 6 und 7 dargestellt, an, oder steigt die Lichtleistung durch einen internen Gerätefehler des Lichtgitters, welcher z. B. zum Anstieg des LED-Sendestroms führt, wird dies zum Überschreiten der Referenzlichtleistung S4 des eingelernten freien Lichtstrahles gemäß Figur 4 führen. Durch eine in der Auswerteeinheit vorgesehene obere Schaltschwelle S2, wie in Figur 4 dargestellt, ist es nun möglich, die Dejustage gemäß Figur 7 zu erkennen und ein Ansteigen der Lichtleistung aufgrund der Dejustage durch Überschreitung der oberen Schaltschwelle S2 in der Auswerteeinheit zu erkennen, um ein Signal oder Warnsignal auszugeben und/oder ein Sicherheitsschaltsignal auszugeben, um eine gefahrbringende Bewegung einer Maschine zu stoppen. Da die Überschreitung der oberen Schaltschwelle S2 bei freiem Schutzfeld erkannt wird, ist das Vorsehen der oberen Schaltschwelle S2 eine präventive Sicherheitsmaßnahme. Die obere Schaltschwelle S2 gemäß Figur 4 wird dabei so in der Auswerteeinheit eingestellt, dass unvermeidliche Schwankungen in der empfangenen Lichtleistung die Überwachung des Schutzfeldes nicht stören. Damit die Überschreitung der oberen Schaltschwelle S2 keine unnötigen Abschaltungen durch das ausgegebene Sicherheitsschaltsignal verursacht, kann lediglich das Warnsignal ausgegeben werden und ggf. ein Nachführen der Schwelle der Referenzlichtleistung des eingelernten freien Lichtstrahles S4 durchgeführt werden.

Die Überwachung der oberen Schaltschwelle S2 ist in den Fällen nicht geeignet, einen Anstieg der empfangenen Lichtleistung gemäß Figur 6 und 7 zu erkennen, wenn bereits ein Prüfkörper oder ein Objekt im Schutzfeld ist und einen großen Bereich der Lichtstrahlen wenigstens eines Lichtsenders abdeckt. In diesem Fall verhindert das Objekt das Überschreiten der oberen Schaltschwelle S2 gemäß Figur 4. Es kann dann nicht mehr unterschieden werden, ob z.B. durch Dejustage der Anstieg der Lichtleistung entsteht oder ob der Anstieg durch das Verlassen des Objektes aus dem Schutzfeld begründet ist.

Gemäß der Erfindung ist deshalb eine zweite untere Schaltschwelle S3 vorgesehen, die geringfügig unterhalb der Referenzlichtleistung S4 des eingelernten freien Lichtstrahles und oberhalb der ersten unteren Schaltschwelle S1 liegt, entsprechend Figur 4. Ein bereits unterbrochener Lichtstrahl wird erst wieder freigegeben, wenn die empfangene Lichtleistung wieder nahezu dem Ausgangswert vor der Stahlunterbrechung entspricht. Das Überschreiten der zweiten unteren Schaltschwelle S3 wird mit sehr hoher Wahrscheinlichkeit beim Verlassen des Objektes wieder erreicht und führt daher nicht zu einer Abschaltung durch ein Sicherheitsschaltsignal.

Im dargestellten Beispiel von Figur 8 ist gezeigt, dass die vollständige Überstrahlung der Empfangsoptik durch den Lichtsendekegel wesentliche Grundlage für die zuverlässige Objektdetektion bei Teilstrahlabdeckung ist. Gemäß Figur 8 wird der Prüfstab 30 gar nicht detektiert, da er keine Lichtstrahlen des Lichtsenders L abdeckt.

Im weiteren dargestellten Beispiel von Figur 8a ist gezeigt, dass das vollständige Einsehen der Optik des Lichtsenders L von dem Lichtempfänger E notwendig ist für eine zuverlässige Objektdetektion bei Teilstrahlabdeckung. Gemäß Figur 8a wird der Prüfstab 30 gar nicht detektiert. Der Prüfstab 30 deckt zwar Lichtstrahlen des Lichtsenders L ab, jedoch werden diese Lichtstrahlen gar nicht vom Lichtempfänger E empfangen. Gemäß der Erfindung ist es deshalb notwendig, dass die optischen Einheiten derart zueinander angeordnet sind, dass jede Optik des Lichtempfängers E vollständig vom Licht des zugehörigen Lichtsenders L überstrahlt wird und jede Optik des Lichtsenders L vollständig von dem Lichtempfänger E erfasst wird.

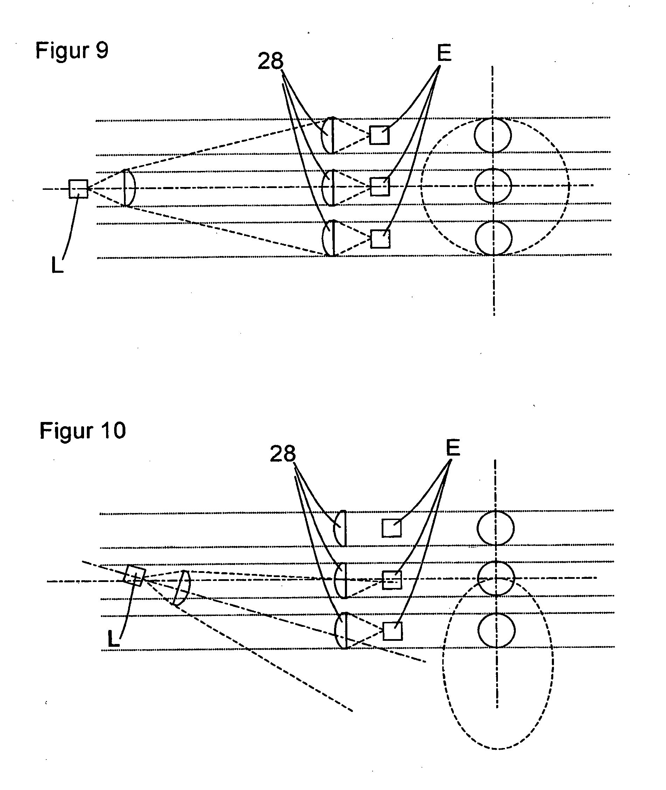

Ein Kreuzstrahlverfahren zur Überwachung der Überstrahlung zeigt Figur 9 und 10. Analog zu Figur 5 ist links in Figur 9 und Figur 10 eine Seitenansicht und analog zu Figur 5a, rechts in Figur 9 und 10 jeweils eine Frontansicht der Lichtstrahlen und des Lichtsendekegels dargestellt. In Figur 10 wird die mittlere Empfangsoptik 28 vom zugehörigen mittleren Lichtsender L nur teilweise überstrahlt. Daher empfängt der darüber liegende Lichtempfänger E vom mittleren Lichtsender L kein Licht. Empfangen die benachbarten Lichtempfänger E Licht vom mittleren Lichtsender L, wie in Figur 9 dargestellt, ist auch der zum Lichtsender L zugehörige mittlere Lichtempfänger E vollständig überstrahlt. Abhängig vom geometrischen Aufbau des Lichtgitters und dem Abstand der Lichtsender L und Lichtempfänger E zueinander kann nun als Bedingung vorgesehen sein, dass bei Inbetriebnahme des Lichtgitters Lichtstrahlen eines Lichtsenders L auf mehrere Lichtempfänger E trifft oder ein Lichtempfänger E das Licht mehrerer Lichtsender L vollständig empfangen kann.

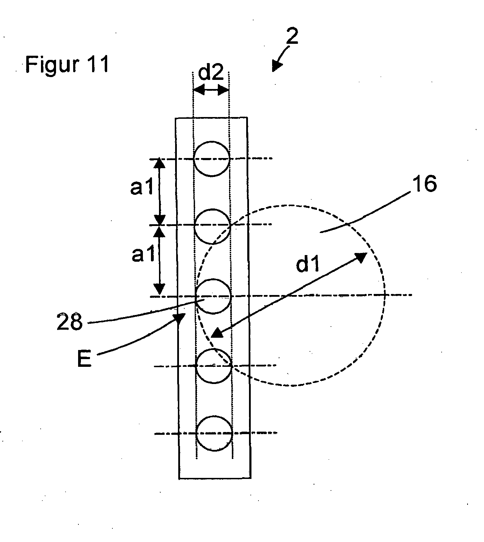

Figur 11 zeigt das Verfahren gemäß Figur 9 und 10 bei seitlicher Versetzung der Lichtsendekegel 16 zur einer Längsachse des Lichtgitters 2. Der Durchmesser des Lichtsendekegels beim Auftreffen auf die Optiken der Lichtempfänger ist mit d1 bezeichnet. Der Abstand der Lichtempfänger ist mit a1 bezeichnet und der Durchmesser der Optiken der Lichtempfänger mit d2. Dabei wird nur der mittlere Lichtempfänger E mit der Optik 28 vollständig von dem Lichtsendekegel 16 überstrahlt. Durch das beschriebene Kreuzstrahlverfahren entstehen neben den paarweise vorgesehenen Lichtsendern und Lichtempfängern zusätzliche Strahlpaare aus Lichtsender und Lichtempfänger, welche eine Reaktionszeit des Lichtgitters erhöhen. Es ist deshalb von Vorteil, das beschriebene Kreuzstrahlverfahren nur beim Einlernprozess und vor jedem Zurücknehmen des Sicherheitsschaltsignals bei Freiwerden des Schutzfeldes durchzuführen, da die Durchführung zu diesem Zeitpunkt keinen Einfluss auf die Reaktionszeit des Lichtgitters hat.

### Bezugszeichenliste:

- 1: optoelektronischer Sensor
- 2: Lichtgitter
- 8: erste optische Einheit
- 10: zweite optische Einheit
- 12 Lichtstrahl 14: Schutzfeld
- 16: Lichtsendekegel
- 18: Empfangskegel
- 20: Steuereinheit
- 21: Empfangselektronik
- 22: Auswerteeinheit
- 24: Objekt
- 28: Optik
- 30: zylindrischer Prüfkörper
- L: Lichtsender
- E: Lichtempfänger
- S1: erste untere Schaltschwelle
- S2: obere Schaltschwelle
- S3: zweite untere Schaltschwelle
- S4: eingelernte Referenzlichtleistung bei freiem Lichtstrahl

## Patentansprüche

1. Verfahren zum Betreiben eines Sicherheitslichtgitters mit den Schritten:
- Aussenden von Lichtstrahlen (12) von Lichtsendern (L) einer ersten und/oder zweiten optischen Einheit (8, 10),
- Empfangen der Lichtstrahlen (12) mit Lichtempfängern (E) der zweiten und/oder ersten optischen Einheit (10, 8) und Erzeugen von Empfangssignalen, wobei jeweils ein Lichtsender (L) einem Lichtempfänger (E) gegenüberliegend zugeordnet ist, so dass die Lichtstrahlen (12) solch gebildeter Paare von Lichtsendern (L) und Lichtempfängern (E) ein Schutzfeld (14) bilden,
- Auswerten der Empfangssignale der Lichtempfänger (E),
- Erzeugen eines Sicherheitsschaltsignals bei unzulässigem Objekteingriff in das Schutzfeld (14),
**gekennzeichnet durch** die weiteren Schritte:
- Ansteuern der Lichtsender (L) und/oder Verstärken der Empfangssignale der Lichtempfänger (E), so dass alle Empfangssignale bei freiem Schutzfeld (14) im nicht gesättigten Bereich der Empfangselektronik (21) liegen,
- Einlernen einer Referenzlichtleistung (S4) des freien Lichtstrahls zwischen Lichtsender und Lichtempfänger,
- Auswerten der Amplituden aller Empfangssignale
- und Ausgeben des Sicherheitsschaltsignals, wenn **durch** einen unzulässigen Objekteingriff wenigstens eine der Amplituden in einem bestimmten Bereich liegt,
wobei ein Lichtstrahl zwischen Lichtsendern (L) und Lichtempfängern (E) als unterbrochen gilt, wenn empfangenes Licht eine erste untere Schaltschwelle (S1) unterschreitet und das Sicherheitsschaltsignal ausgegeben wird, wenn wenigstens ein Lichtstrahl (12) unterbrochen ist, wobei eine zweite untere Schaltschwelle (S3) in der Auswerteeinheit (22) vorgesehen ist, die über der ersten unteren Schaltschwelle (S1) liegt, deren Überschreitung ein freies Schutzfeld (14) anzeigt,
die zweite untere Schaltschwelle (S3) unterhalb der eingelernten Referenzlichtleistung (S4) des freien Lichtstrahls und oberhalb der ersten unteren Schaltschwelle (S1) liegt und
in der Auswerteeinheit (22) zur Auswertung des empfangenen Lichts wenigstens eines Lichtempfängers (E) eine obere Schaltschwelle (S2) vorgesehen ist, deren Wert über dem Wert der ersten unteren Schaltschwelle (S1) und der Referenzlichtleistung (S4) liegt, wobei ein Warnsignal oder das Sicherheitssignal ausgegeben wird, wenn der Wert des empfangenen Lichts über dem oberen Schwellwert (S2) liegt.

2. Verfahren nach Anspruch 1, **dadurch gekennzeichnet dass** die Unterschreitung der ersten unteren Schaltschwelle zu einem Wechsel eines Status von einem Zustand 'Lichtweg frei' zu einem Zustand 'Lichtweg unterbrochen' führt und insbesondere dieser Zustand von einer Anzeige angezeigt wird und/oder die Überschreitung der zweiten unteren Schaltschwelle zu einem Wechsel des Status von dem Zustand 'Lichtweg unterbrochen' zu dem Zustand 'Lichtweg frei' führt und insbesondere dieser Zustand von einer Anzeige angezeigt wird.

3. Verfahren nach einem der vorhergehenden Ansprüche, **dadurch gekennzeichnet, dass** die Senderleistung für jeden Lichtsender (L) einzeln eingestellt wird und/oder die Lichtsender (L) so eingestellt sind, dass diese alle zu einer gleichen Lichtleistung auf den zugehörigen Lichtempfänger (E) führen und die Lichtleistung abhängig von einem Abstand zwischen den Lichtsendern (L) und Lichtempfängern (E) nur noch an allen Lichtsendern (L) gleichermaßen verändert wird.

4. Verfahren nach einem der vorhergehenden Ansprüche, **dadurch gekennzeichnet, dass** die Lichtstrahlen (12) von verschiedenen Sende-/Empfangspaaren unterschiedlich kodiert sind.

5. Verfahren nach einem der vorhergehenden Ansprüche, **dadurch gekennzeichnet, dass** eine Senderleistung geregelt wird und die Empfangssignale mit fest eingestellter Verstärkung der Empfangselektronik (21) verstärkt werden und/oder die Verstärkung der Empfangselektronik (21) eingestellt und die Senderleistung fest eingestellt, insbesondere auf maximale Leistung eingestellt wird.

6. Verfahren nach einem der vorhergehenden Ansprüche, **dadurch gekennzeichnet, dass** über einen Kommunikationskanal die Steuereinheit (20) mit der Verstärkungseinstellung der Empfangselektronik (21) kommunizieren kann.

7. Verfahren nach einem der vorhergehenden Ansprüche, **dadurch gekennzeichnet, dass** die Amplitudenwerte der Empfangssignale in einem Speicher der Auswerteeinheit (22) gespeichert werden und/oder zur Überprüfung des Lichtgitters die Senderleistung der Lichtsender (L) variiert wird und die dieser Variation entsprechenden Veränderungen der Empfangssignale von der Auswerteeinheit (22) detektiert und ausgewertet werden.

8. Verfahren nach einem der vorhergehenden Ansprüche, **dadurch gekennzeichnet, dass** die optischen Einheiten derart zueinander ausgerichtet werden, dass jede Optik des Lichtempfängers vollständig vom Licht des zugehörigen Lichtsenders überstrahlt wird und jede Optik des Lichtsenders vollständig von dem Lichtempfänger erfasst wird und/oder bei Inbetriebnahme des Lichtgitters Lichtstrahlen eines Lichtsenders (L) auf mehrere Lichtempfänger (E) treffen oder ein Lichtempfänger (E) das Licht mehrerer Lichtsender vollständig empfängt.

9. Sicherheitslichtgitter zur Durchführung des Verfahrens nach einem der vorhergehenden Ansprüche, mit einer ersten optischen Einheit (8), die eine Reihe nebeneinander angeordneter Lichtsender (L) und/oder Lichtempfänger (E) aufweist und einer zweiten optischen Einheit (10), die den Lichtsendern (L) bzw. Lichtempfängern (E) der ersten optischen Einheit (8) zugeordnete ebenfalls nebeneinander angeordnete Lichtempfänger (E) bzw. Lichtsender (L) aufweist, wobei jeweils ein Lichtsender (L) einem Lichtempfänger (E) gegenüberliegend zugeordnet ist, so dass die Lichtstrahlen solch gebildeter Paare von Lichtsendern (L) und Lichtempfängern (E) ein Schutzfeld (14) bilden, mit einer Empfangselektronik (21) zur Verstärkung der Empfangssignale der Lichtempfänger (E) und einer Auswerteeinheit (22), die die Empfangssignale auswertet und bei unzulässigem Objekteingriff in das Schutzfeld (14) ein Sicherheitsschaltsignal ausgibt, **dadurch gekennzeichnet, dass** den Lichtsendern (L) eine Steuereinheit (20) zur Einstellung einer Senderleistung zugeordnet ist und die Empfangselektronik (21) dazu ausgebildet ist, die Verstärkung der Empfangssignale so einzustellen, dass bei freiem Schutzfeld (14) alle verstärkten Empfangssignale im nicht gesättigten Bereich der Empfangselektronik (21) liegen, dass in der Auswerteeinheit (22) eine Referenzlichtleistung (S4) des freien Lichtstrahls zwischen Lichtsender (L) und Lichtempfänger (E) gespeichert ist,
wobei ein Lichtstrahl zwischen Lichtsendern (L) und Lichtempfängern (E) als unterbrochen gilt, wenn empfangenes Licht eine erste untere Schaltschwelle (S1) unterschreitet und ein Sicherheitsschaltsignal ausgebbar ist, wenn wenigstens ein Lichtstrahl (12) unterbrochen ist, wobei eine zweite untere Schaltschwelle (S3) in der Auswerteeinheit (22) vorgesehen ist, die über der ersten unteren Schaltschwelle (S1) liegt, deren Überschreitung ein freies Schutzfeld (14) bedeutet, die zweite untere Schaltschwelle (S3) unterhalb der eingelernten Referenzlichtleistung (S4) des freien Lichtstrahls und oberhalb der ersten unteren Schaltschwelle (S1) liegt und in der Auswerteeinheit (22) zur Auswertung des empfangenen Lichts wenigstens eines Lichtempfängers (E) eine obere Schaltschwelle (S2) vorgesehen ist, deren Wert über dem Wert der ersten unteren Schaltschwelle (S1) und der eingelernten Referenzlichtleistung (S4) liegt, wobei ein Warnsignal oder das Sicherheitssignal abgebbar ist, wenn der Wert des empfangenen Lichts über dem oberen Schwellwert (S2) liegt.

10. Sicherheitslichtgitter nach Anspruch 9, **dadurch gekennzeichnet, dass** die Unterschreitung der ersten unteren Schaltschwelle einen Wechsel eines Status von dem Zustand 'Lichtweg frei' zu dem Zustand 'Lichtweg unterbrochen' bedeutet und insbesondere dieser Zustand von einer Anzeige anzeigbar ist und/oder die Überschreitung der zweiten unteren Schaltschwelle einen Wechsel des Status von dem Zustand 'Lichtweg unterbrochen' zu dem Zustand 'Lichtweg frei' bedeutet und insbesondere dieser Zustand von einer Anzeige anzeigbar ist.

11. Sicherheitslichtgitter nach einem der vorhergehenden Ansprüche 9 bis 10, **dadurch gekennzeichnet, dass** die Lichtsender (L) so eingestellt sind, dass diese alle zu einer gleichen Lichtleistung auf den zugehörigen Lichtempfänger (E) führen und die Lichtleistung abhängig von einem Abstand zwischen den Lichtsendern (L) und Lichtempfängern (E) nur noch an allen Lichtsendern (L) gleichermaßen veränderbar ist.

12. Sicherheitslichtgitter nach einem der vorhergehenden Ansprüche 9 bis 11, **dadurch gekennzeichnet, dass** die Lichtstrahlen (12) von verschiedenen Sende-/Empfangspaaren unterschiedlich kodierbar sind.

13. Sicherheitslichtgitter nach einem der vorhergehenden Ansprüche 9 bis 12, **dadurch gekennzeichnet, dass** ein Kommunikationskanal vorgesehen ist, so dass die Steuereinheit (20) mit einer Verstärkungseinstellung der Empfangselektronik (21) kommunizieren kann.

14. Sicherheitslichtgitter nach Anspruch 13, **dadurch gekennzeichnet, dass** der Kommunikationskanal aus einer galvanischen oder einer drahtlosen Verbindung gebildet ist oder der Kommunikationskanal aus einer optischen Verbindung zwischen den beiden optischen Einheiten (8, 10) gebildet ist, wobei die optische Verbindung vorzugsweise durch eines der Paare von Lichtsender (L) und Lichtempfänger (E) gebildet ist.

15. Sicherheitslichtgitter nach einem der vorhergehenden Ansprüche 9 bis 14, **dadurch gekennzeichnet, dass** die optischen Einheiten derart zueinander angeordnet sind, dass jede Optik des Lichtempfängers vollständig vom Licht des zugehörigen Lichtsenders überstrahlt wird und jede Optik des Lichtsenders vollständig von dem Lichtempfänger erfasst wird und/oder bei Inbetriebnahme des Lichtgitters die optischen Einheiten derart ausgerichtet sind, dass Lichtstrahlen eines Lichtsenders (L) auf mehrere Lichtempfänger (E) treffen oder dass der Lichtempfänger (E) das Licht mehrerer Lichtsender vollständig empfängt.

## Claims

1. A method of operating a safety light grid comprising the steps:
- transmitting light beams (12) from light transmitters (L) of a first and/or second optical unit (8, 10);
- receiving the light beams (12) with light receivers (E) of the second and/or first optical unit (10, 8) and generating received signals, wherein a respective light transmitter (L) is associated with and disposed opposite a light receiver (E) such that the light beams (12) of such formed pairs of light transmitters (L) and light receivers (E) form a protected field;
- evaluating the received signals of the light receivers (E);
- generating a safety switching signal on an unpermitted object intrusion into the protected field (14),
**characterised by** the further steps:
- controlling the light transmitter (L) and/or amplifying the received signals of the light receivers (E) such that all received signals lie in the non-saturated region of the reception electronics (21) with a free protected field (14);
- teaching a reference light power (S4) of the free light beam between the light transmitter and the light receiver;
- evaluating the amplitudes of all received signals;
- and outputting the safety switching signal when at least one of the amplitudes lies in a specific range due to an unpermitted object intrusion,
wherein a light beam between light transmitters (L) and light receivers (E) is deemed to be interrupted when received light falls below a first lower switching threshold (S1) and the safety switching signal is output when at least one light beam (12) is interrupted, with a second lower switching threshold (S3) being provided in the evaluation unit (22) which
lies above the first lower switching threshold (S1), the exceeding of which indicates a free protected field (14);
wherein the second lower switching threshold (S3) lies beneath the taught reference light power (S4) of the free light beam and lies above the first lower switching threshold (S1); and
wherein an upper switching threshold (S2) is provided in the evaluation unit (22) for evaluating the received light of at least one light receiver (E), with the value of said upper switching threshold lying above the value of the first lower switching threshold (S1) and of the reference light power (S4), with a warning signal or the safety signal being output when the value of the received light lies above the upper switching value (S2).

2. A method in accordance with claim 1, **characterised in that** the falling below of the first lower switching threshold results in a change of a status from a state "light path free" to a state "light path interrupted" and this state is in particular displayed by a display and/or the exceeding of the second lower switching threshold results in a change of the status from the state "light path interrupted" to the state "light path free" and this state is in particular displayed by a display.

3. A method in accordance with one of the preceding claims, **characterised in that** the transmitter power is set individually for each light transmitter (L) and/or the light transmitter (L) is set such that they all result in the same light power on the associated light receiver (E) and the light power is only changed to the same degree at all light transmitters (L) in dependence on a spacing between the light transmitters (L) and the light receivers (E).

4. A method in accordance with any one of the preceding claims, **characterised in that** the light beams (12) of different transmission/reception pairs are encoded differently.

5. A method in accordance with any one of the preceding claims, **characterised in that** a transmitter power is regulated and the received signals are amplified by a fixedly set amplification of the reception electronics (21) and/or the amplification of the reception electronics (21) is set and the transmitter power is fixedly set, is in particular set to a maximum power.

6. A method in accordance with any one of the preceding claims, **characterised in that** the control unit (20) can communicate with the amplification setting of the reception electronics (21) via a communication channel.

7. A method in accordance with any one of the preceding claims, **characterised in that** the amplitude values of the received signals are stored in a memory of the evaluation unit (22) and/or the transmitter power of the light transmitters (L) is varied for checking the light grid and the changes of the received signals corresponding to this variation are detected and evaluated by the evaluation unit (22).

8. A method in accordance with any one of the preceding claims, **characterised in that** the optical units are aligned with respect to one another such that each optics of the light receiver is completely outshone by the light of the associated light transmitter and each optics of the light transmitter is completely detected by the light receiver and/or, on the putting into operation of the light grid, light beams of a light transmitter (L) are incident onto a plurality of light receivers (E) or a light receiver (E) completely receives the light of a plurality of light transmitters.

9. A safety light grid for carrying out the method in accordance with any one of the preceding claims, comprising a first optical unit (8) which has a series of light transmitters (L) and/or light receivers arranged next to one another and comprising a second optical unit (10) which has light receivers (E) and/or light transmitters (L) which are associated with the light transmitters (L) and the light receivers (E) respectively of the first optical unit (8) and which are likewise arranged next to one another, wherein a respective light transmitter (L) is associated with and is disposed opposite a light receiver (E) such that the light beams of such formed pairs of light transmitters (L) and light receivers (E) form a protected field (14), comprising reception electronics (21) for amplifying the received signals of the light receivers (E) and comprising an evaluation unit (22) which evaluates the received signals and outputs a safety switching signal on an unpermitted object intrusion into the protected field (14), **characterised in that** a control unit (20) is associated with the light transmitters (L) for setting a transmitter power and the reception electronics (21) are configured to set the amplification of the received signals such that all the amplified reception signals lie in the non-saturated region of the reception electronics (21) with a free protected field (14); **in that** a reference light power (S4) of the free light beam between the light transmitter (L) and the light receiver (E) is stored in the evaluation unit (22),
wherein a light beam between light transmitters (L) and light receivers (E) is deemed to be interrupted when received light falls below a first lower switching threshold (S1) and a safety switching signal is output when at least one light beam (12) is interrupted,
wherein a second lower switching threshold (S3) is provided in the evaluation unit (22) which lies above the first lower switching threshold (S1), the exceeding of which means a free protected field (14); the second lower threshold value (S3) lies beneath the taught reference light power (S4) of the free light beam and above the first lower switching threshold (S1); and an upper switching threshold (S2) is provided in the evaluation unit (22) for evaluating the received light of at least one light receiver (E), with the value of said upper switching threshold lying above the value of the first lower switching threshold (S1) and of the taught reference light power (S4), wherein a warning signal or the safety signal is output when the value of the received light lies above the upper switching value (S2).

10. A safety light grid in accordance with claim 9, **characterised in that** the falling below of the first lower switching threshold results in a change of a status from the state "light path free" to the state "light path interrupted" and this state can in particular be displayed by a display and/or the exceeding of the second lower switching threshold results in a change of the status from the state "light path interrupted" to the state "light path free" and this state can in particular be displayed by a display.

11. A safety light grid in accordance with any one of the preceding claims 9 to 10, **characterised in that** the light transmitters (L) are set such that they all result in the same light power on the associated light receivers (E) and the light power is only changeable to the same degree at all light transmitters (L) in dependence on a spacing between the light transmitters (L) and the light receivers (E).

12. A safety light grid in accordance with any one of the preceding claims 9 to 11, **characterised in that** the light beams (12) can be differently encoded by different transmission/reception pairs.

13. A safety light grid in accordance with any one of the preceding claims 9 to 12, **characterised in that** a communication channel is provided so that the control unit (20) can communicate with an amplification setting of the reception electronics (21).

14. A safety light grid in accordance with claim 13, **characterised in that** the communication channel is formed from a galvanic connection or from a wireless connection or the communication channel is formed from an optical connection between the two optical units (8, 10), with the optical connection preferably being formed by one of the pairs of light transmitters (L) and light receivers (E).

15. A safety light grid in accordance with any one of the preceding claims 9 to 14, **characterised in that** the optical units are arranged with respect to one another such that each optics of the light receiver is completely outshone by the light of the associated light transmitter and each optics of the light transmitter is completely detected by the light receiver and/or, on the putting into operation of the light grid, the optical units are aligned such that light beams of a light transmitter (L) are incident onto a plurality of light receivers (E) or such that the light receiver (E) completely receives the light of a plurality of light transmitters.

## Revendications

1. Procédé pour le fonctionnement d'une barrière lumineuse de sécurité, comprenant les étapes consistant à :
- émettre des rayons de lumière (12) depuis des émetteurs de lumière (L) d'une première et/ou d'une seconde unité optique (8, 10),
- recevoir les rayons de lumière (12) avec des récepteurs de lumière (E) de la seconde et/ou de la première unité optique (10, 8) et engendrer des signaux de réception, de telle façon qu'un émetteur de lumière (L) est respectivement associé à un récepteur de lumière (E) situé à l'opposé, de sorte que les rayons de lumière (12) de paires ainsi formées d'émetteurs de lumière (L) et de récepteurs de lumière (E) forment un champ de protection (14),
- évaluer les signaux de réception des récepteurs de lumière (E),
- engendrer un signal de commutation de sécurité en cas d'intervention inadmissible d'un objet dans le champ de protection (14),
**caractérisé par** les autres étapes consistant à :
- piloter les émetteurs de lumière (L) et/ou amplifier les signaux de réception des récepteurs de lumière (E) de telle façon que tous les signaux de réception, lorsque le champ de protection (14) est libre, sont situés dans la zone non saturée de l'unité électronique de réception (21),
- faire l'apprentissage d'une puissance lumineuse de référence (S4) du rayon de lumière libre entre l'émetteur de lumière et le récepteur de lumière,
- évaluer les amplitudes de tous les signaux de réception
- et délivrer le signal de commutation de sécurité quand, en raison d'une intervention inadmissible d'un objet, l'une au moins des amplitudes tombe dans une plage déterminée,
dans lequel un rayon de lumière entre émetteurs de lumière (L) et récepteurs de lumière (E) est considéré comme interrompu si la lumière reçue passe au-dessous d'un premier seuil de commutation inférieur (S1) et le signal de commutation de sécurité est délivré quand au moins un rayon de lumière (12) est interrompu,
dans lequel il est prévu un second seuil de commutation inférieur (S3) dans l'unité d'évaluation (22), qui est situé au-dessus du premier seuil de commutation inférieur (S1), le dépassement de ce second seuil indiquant un champ de protection libre (14),
le second seuil de commutation inférieur (S3) est situé au-dessous de la puissance de lumière de référence apprise (S4) du rayon de lumière libre et au-dessus du premier seuil de commutation inférieur (S1), et pour l'évaluation de la lumière reçue dans au moins un récepteur de lumière (E) il est prévu un seuil de commutation supérieur (S2) dont la valeur est située au-dessus de la valeur du premier seuil de commutation inférieur (S1) et de la puissance lumineuse de référence (S4), dans lequel un signal d'avertissement ou le signal de sécurité est délivré si la valeur de la lumière reçue est située au-dessus de la valeur seuil supérieur (S2).

2. Procédé selon la revendication 1, **caractérisé en ce que** le passage au-dessous du premier seuil de commutation inférieur mène à un changement d'état depuis une situation "trajet de lumière libre" vers une situation "trajet de lumière interrompu" et cette situation est en particulier indiquée par un affichage et/ou le passage au-dessus du second seuil de commutation inférieur mène à un changement d'état depuis la situation "trajet de lumière interrompu" vers la situation "trajet de lumière libre" et cette situation est en particulier indiquée par un affichage.

3. Procédé selon l'une des revendications précédentes, **caractérisé en ce que** la puissance d'émission pour chaque émetteur de lumière (L) est réglée individuellement et/ou les émetteurs de lumière (L) sont réglés de telle façon que ceux-ci mènent tous à une puissance lumineuse égale sur le récepteur de lumière associé (E), et la puissance lumineuse n'est alors plus modifiée que de façon égale à tous les émetteurs de lumière, en fonction d'une distance entre les émetteurs de lumière (L) et les récepteurs de lumière (E).

4. Procédé selon l'une des revendications précédentes, **caractérisé en ce que** les rayons de lumière (12) de différentes paires émetteur/récepteur sont codés de façon différente.

5. Procédé selon l'une des revendications précédentes, **caractérisé en ce qu'**une puissance d'émission est régulée et les signaux de réception sont amplifiés avec une amplification fixe de l'unité électronique de réception (21) et/ou l'amplification de l'unité électronique de réception (21) est réglée et la puissance d'émission est réglée de manière fixe, en particulier réglée à la puissance maximale.

6. Procédé selon l'une des revendications précédentes, **caractérisé en ce que** l'unité de commande (20) est en mesure de communiquer avec le réglage d'amplification de l'unité électronique de réception (21) via un canal de communication.

7. Procédé selon l'une des revendications précédentes, **caractérisé en ce que** les valeurs d'amplitude des signaux de réception sont mémorisées dans une mémoire de l'unité d'évaluation (22) et/ou pour la vérification de la barrière lumineuse la puissance d'émission des émetteurs de lumière (L) est variée et les modifications correspondant à cette variation dans les signaux de réception sont détectées et évaluées par l'unité d'évaluation (22).

8. Procédé selon l'une des revendications précédentes, **caractérisée en ce que** les unités optiques sont orientées les unes par rapport aux autres de telle façon que chaque optique du récepteur de lumière est couverte entièrement par la lumière de l'émetteur de lumière associée et chaque optique de l'émetteur de lumière est couverte entièrement par le récepteur de lumière et/ou lors de la mise en service de la barrière lumineuse les rayons de lumière d'un émetteur de lumière (L) tombent sur plusieurs récepteurs de lumière (E), ou bien un récepteur de lumière (E) reçoit entièrement la lumière de plusieurs émetteurs de lumière.

9. Barrière lumineuse de sécurité pour la mise en oeuvre du procédé selon l'une des revendications précédentes, comprenant une première unité optique (8) qui comporte une rangée d'émetteurs de lumière (L) et/ou de récepteurs de lumière (E) agencés les uns à côté des autres, et une seconde unité optique (10), qui comporte des récepteurs de lumière (E) ou des émetteurs de lumière (L), associés aux émetteurs de lumière (L) ou aux récepteurs de lumière (E) de la première unité optique (8), également agencés les uns à côté des autres, dans lequel un émetteur de lumière (L) est associé à un récepteur de lumière (E) situé à l'opposé, de sorte que les rayons de lumière de paires ainsi formées d'émetteurs de lumière (L) et de récepteurs de lumière (E) forment un champ de protection (14), comprenant une unité électronique de réception (21) pour l'amplification des signaux de réception des récepteurs de lumière (E), et une unité d'évaluation (22) qui évalue les signaux de réception et qui, en cas d'intervention inadmissible d'un objet dans le champ de protection (14), délivre un signal de commutation de sécurité, **caractérisé en ce qu'**une unité de commande (20) est associée aux émetteurs de lumière (L) pour régler une puissance d'émission, et l'unité électronique de réception (21) est réalisée pour régler l'amplification des signaux de réception de telle façon que si le champ de protection est libre (14) tous les signaux de réception amplifiés tombent dans la plage non saturée de l'unité électronique de réception (21) et que dans l'unité d'évaluation (22) une puissance de lumière de référence (S4) du rayon de lumière libre entre l'émetteur de lumière (L) et le récepteur de lumière (E) est mémorisée,
dans lequel un rayon de lumière entre émetteurs de lumière (L) et récepteurs de lumière (E) est considéré comme interrompu si la lumière reçue pas au-dessous d'un premier seuil de commutation inférieur (S1) et un signal de commutation de sécurité peut être délivré si au moins un rayon de lumière (12) est interrompu,
dans lequel un second seuil de commutation inférieur (S3) est prévu dans l'unité évaluation (22), situé au-dessus du premier seuil de commutation inférieur (S1), le dépassement de ce second seuil signifiant un champ de protection libre (14), le second seuil de commutation inférieur (S3) est situé au-dessous de la puissance de lumière de référence apprise (S4) du rayon de lumière libre et au-dessus du premier seuil de commutation inférieur (S1) et, pour l'évaluation de la lumière reçue, il est prévu dans l'unité d'évaluation (22) au moins un récepteur de lumière (E) et un seuil de commutation supérieur (S2), dont la valeur est située au-dessus de la valeur du premier seuil de commutation inférieur (S1) et de la puissance de lumière de référence apprise (S4), et un signal d'avertissement ou le signal de sécurité est susceptible d'être délivré si la valeur de la lumière reçue tombe au-dessus de la valeur seuil supérieure (S2)

10. Barrière lumineuse de sécurité selon la revendication 9, **caractérisée en ce que** le passage au-dessous du premier seuil de commutation inférieur signifie un changement d'un état depuis la situation "trajet de lumière libre" vers la situation "trajet de lumière interrompu" et cette situation est en particulier susceptible d'être indiquée par un affichage et/ou le passage au-dessus du second seuil de commutation inférieur signifie un changement de l'état depuis la situation "trajet de lumière interrompu" vers la situation "trajet de lumière libre" et cette situation est en particulier susceptible d'être indiquée par un affichage.

11. Barrière lumineuse de sécurité selon l'une des revendications précédentes 9 à 10, **caractérisée en ce que** les émetteurs de lumière (L) sont réglés de telle façon que ceux-ci mènent tous à une puissance lumineuse égale sur les récepteurs de lumière associés (E) et la puissance lumineuse ne peut plus être modifiée que de façon égale sur tous les émetteurs de lumière (L) en fonction d'une distance entre les émetteurs de lumière (L) et les récepteurs de lumière (E).

12. Barrière lumineuse de sécurité selon l'une des revendications précédentes 9 à 11, **caractérisée en ce que** les rayons de lumière (12) de différentes paires émetteur/récepteur sont susceptibles d'être codés différemment.

13. Barrière lumineuse de sécurité selon l'une des revendications précédentes 9 à 12, **caractérisée en ce qu'**il est prévu un canal de communication de telle façon que l'unité de commande (20) est capable de communiquer avec un réglage d'amplification de l'unité électronique de réception (21).

14. Barrière lumineuse de sécurité selon la revendication 13, **caractérisée en ce que** le canal de communication est formé par une liaison galvanique ou par une liaison sans fil, ou bien **en ce que** le canal de communication est formé par une liaison optique entre les deux unités optiques (8, 10), et la liaison optique est formée de préférence par l'une des paires émetteur de lumière (L) et récepteur de lumière (E).

15. Barrière lumineuse de sécurité selon l'une des revendications précédentes 9 à 14, **caractérisée en ce que** les unités optiques sont agencées les unes par rapport aux autres de telle façon que chaque optique du récepteur de lumière est entièrement couverte par la lumière de l'émetteur de lumière associé, et que chaque optique de l'émetteur de lumière est entièrement couverte par le récepteur de lumière et/ou lors de la mise en service de la barrière lumineuse les unités optiques sont orientées de telle façon que les rayons de lumière d'un émetteur de lumière (L) tombent sur plusieurs récepteurs de lumière (E), ou bien que le récepteur de lumière (E) reçoit entièrement la lumière de plusieurs émetteurs de lumière.
